(19) Europäisches Patentamt
European Patent Office
Office européen des brevets

(11) EP 0 322 724 B1

(12) **EUROPÄISCHE PATENTSCHRIFT**

(45) Veröffentlichungstag und Bekanntmachung des Hinweises auf die Patenterteilung:
**09.04.1997 Patentblatt 1997/15**

(51) Int Cl.6: **C07D 211/62**, C07D 411/12, C09K 19/34

(21) Anmeldenummer: **88121351.6**

(22) Anmeldetag: **21.12.1988**

(54) **Flüssigkristalline, in 1-Stellung substituierte Piperidin-4-carbonsäureester, Verfahren zu ihrer Herstellung und ihre Verwendung in flüssigkristallinen Mischungen**

Liquid crystalline, 1-substituted piperidine-4-carboxylic esters, process for their preparation, and their use in liquid-crystalline mixtures

Esters d'acides pipéridine-4-carboxyliques substitués en position 1 à propriétés de cristaux liquides, procédé pour leur préparation et leur utilisation dans des mélanges de cristaux liquides

(84) Benannte Vertragsstaaten:
**DE**

(30) Priorität: **24.12.1987 DE 3744024**

(43) Veröffentlichungstag der Anmeldung:
**05.07.1989 Patentblatt 1989/27**

(73) Patentinhaber: **HOECHST AKTIENGESELLSCHAFT**
**65926 Frankfurt am Main (DE)**

(72) Erfinder:
- **Günther, Dieter, Dr.**
  **D-6233 Kelkheim(Taunus) (DE)**
- **Ohlendorf, Dieter, Dr.**
  **D-6237 Liederbach (DE)**
- **Wingen, Rainer, Dr.**
  **D-6234 Hattersheim am Main (DE)**

(56) Entgegenhaltungen:
**WO-A-87/05896**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Flüssigkristalle haben in jüngerer Zeit Eingang in verschiedenste technische Gebiete gefunden, in denen elektrooptische und Anzeigevorrichtungs-Eigenschaften gefragt sind (z. B. in Uhren-, Taschenrechner- und Schreibmaschinenanzeigen). Diese Anzeigevorrichtungen beruhen auf den dielektrischen Ausrichtungseffekten in den nematischen, cholesterischen und/oder smektischen Phasen der flüssigkristallinen Verbindungen, wobei - verursacht durch die dielektrische Anisotropie - die molekulare Längsachse der Verbindungen eine bevorzugte Ausrichtung in einem angelegten elektrischen Feld einnimmt. Die üblichen Schaltzeiten bei diesen Anzeigevorrichtungen sind für viele andere potentielle Anwendungsgebiete von Flüssigkristallen, die an sich für die Technik wegen ihrer einzigartigen Eigenschaften sehr vielversprechende chemische Verbindungen sind, eher zu langsam. Dieser Nachteil macht sich insbesondere dann bemerkbar, wenn - was bei größeren Anzeigeelementflächen zwangsläufig der Fall ist - eine große Anzahl von Bildpunkten angesteuert werden muß, wodurch die Produktionskosten solcher, diese größeren Flächen enthaltenden Geräte wie Videogeräte, Oszillographen oder TV-, Radar-, EDV- oder Schreibautomaten-Bildschirme zu hoch wären.

Neben den nematischen und cholesterischen Flüssigkristallen haben seit einigen wenigen Jahren in zunehmendem Maße auch für Praxisanwendungen geneigt ("tilted")-smektische Flüssigkristall-Phasen an Bedeutung gewonnen.

Clark und Lagerwall konnten zeigen, daß die Verwendung solcher Flüssigkristallsysteme in sehr dünnen Zellen zu optoelektrischen Anzeigeelementen führt, die im Vergleich zu den herkömmlichen TN ("twisted nematic")-Zellen um bis zu etwa einem Faktor 1000 schnellere Schaltzeiten haben (vgl. z. B. Lagerwall et al. "Ferroelectric Liquid Crystals for Displays", SID Symposium, October Meeting 1985, San Diego, Ca., USA). Aufgrund dieser und anderer günstiger Eigenschaften, z. B. der bistabilen Schaltmöglichkeit und des nahezu blickwinkelunabhängigen Kontrasts, sind FLC grundsätzlich für die oben genannten Anwendungsgebiete, z. B. über eine Matrixansteuerung, gut geeignet.

Für die praktische Anwendung von ferroelektrischen Flüssigkristallen in optoelektrischen Anzeigen werden nun chiral geneigte, smektische Phasen, z. B. $S_c^*$-Phasen, benötigt (R. B. Meyer, L. Liebert, L. Strzelecki, P. Keller, J. Physique 36, L-69 (1975)), die über einen großen Temperaturbereich stabil sind. Dieses Ziel kann man erreichen mit Verbindungen, die selbst chirale smektische Phasen, z. B. $S_c^*$-Phasen, ausbilden, oder aber indem man nicht-chirale, geneigte smektische Phasen ausbildende Verbindungen mit optisch aktiven Verbindungen dotiert (M. Brunet, C. Williams, Ann. Phys. 3, 237 (1978)).

In der WO-A 87/05896 sind Dotierstoffe für ferroelektrische Flüssigkristallmischungen beschrieben, die ein chirales Amid enthalten, dessen Aminogruppe auch ein Piperidinring sein kann. Letztere Verbindungen weisen jedoch selbst keine flüssigkristallinen Phasen auf.

Es besteht daher ein Bedarf an Verbindungen, die smektische Phasen ausbilden bzw. mit Hilfe derer Mischungen mit smektischen, insbesondere $S_c$- oder $S_c^*$-Phasen, hergestellt werden können und die gleichzeitig mit vielen weiteren Komponenten in flüssigkristallinen Mischungen verträglich sind. Eine Lösung dieser gestellten Aufgabe sind die flüssigkristallinen, in 1-Stellung substituierten Piperidin-4-carbonsäureester der allgemeinen Formel (I),

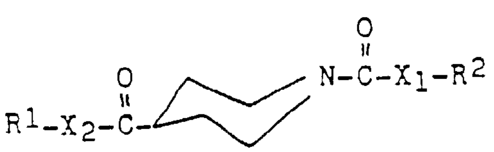

(I)

in der $R^1$ oder $R^2$ einen Rest der allgemeinen Formel (II) bedeutet

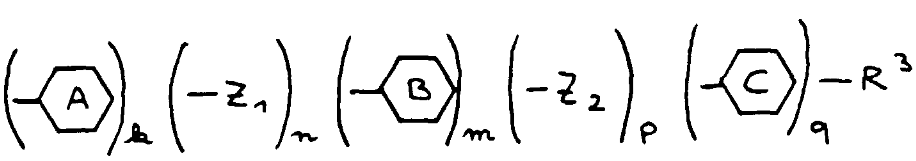

(II)

und im übrigen die Substituenten, Bausteine und Indices folgende Bedeutung haben:

k,n,m,p,q Null oder 1, jedoch p = Null wenn m = Null und k + m + q mindestens 1

$Z_1$ CO-O, O-CO, $(CH_2)_2$, $OCH_2$, $CH_2O$, CO-S, S-CO

| | |
|---|---|
| $Z_2$ | $Z_1$ oder $CH_2$, N = N, N = N(O) |
| $X_1$ | O, S oder $CH_2$ oder Phenylenoxy (bei $R^1$ = (II)) |
| $X_2$ | O oder Phenylenoxy (bei $R^2$ = (II)) |

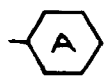 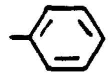 oder 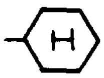

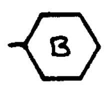 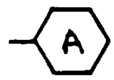 oder 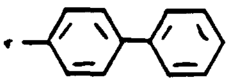

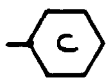 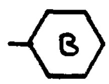 oder 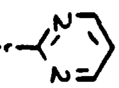, 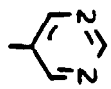, 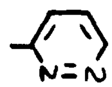, 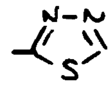, 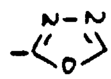,

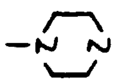, 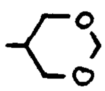, 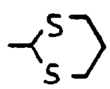, 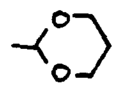, 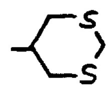, 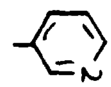,

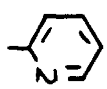, 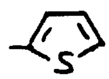, 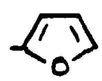, 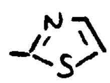, 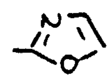,

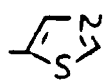, 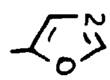

| | |
|---|---|
| $R^3$ | $C_rH_{2r+1}$, $O\text{-}C_rH_{2r+1}$, $S\text{-}C_rH_{2r+1}$, $CO\text{-}C_rH_{2r+1}$, $O\text{-}CO\text{-}C_rH_{2r+1}$ oder $CO\text{-}O\text{-}C_rH_{2r+1}$, wobei r eine ganze Zahl von 1 bis 20 |

und in welcher der Rest $R^1$ oder $R^2$, der nicht durch die allgemeine Formel (II) ausgedrückt wird, eine geradkettige oder verzweigte, durch F, Cl, 3r oder CN substituierte oder unsubstituierte Alkylgruppe mit 1 bis 20 C-Atomen bedeutet, in der eine oder zwei nicht-benachbarte $-CH_2$-Gruppen ersetzt sein können durch -0-, -S-, -CO-, -O-CO-, -CO-O-, -O-CS-, -CO-S- und/oder -CH=CH-, oder die eine Endgruppe $-CH=CH_2$ oder $-CH=C(CH_3)_2$ oder

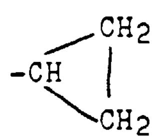

oder eine optisch aktive Gruppe mit einem chiralen Baustein aus der Gruppe

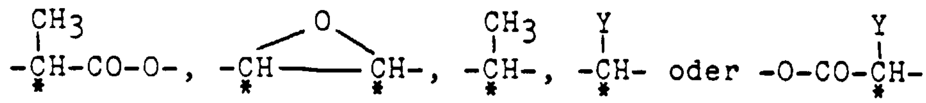

mit Y = F, Cl, Br oder CN aufweist.

Unter den erfindungsgemäßen Verbindungen sind die bevorzugt, bei denen in den allgemeinen Formeln (I) und (II) die Substituenten, Bausteine und Indices folgende Bedeutung haben: bei k, n = Null sind m, p, q = Null oder 1 und m + q mindestens 1, $Z_2$ = CO-O, O-CO oder $CH_2$, $X_1$ = O, $CH_2$ oder Phenylenoxy (bei $R_2$ = (II)), oder

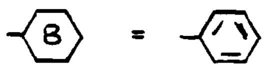

oder

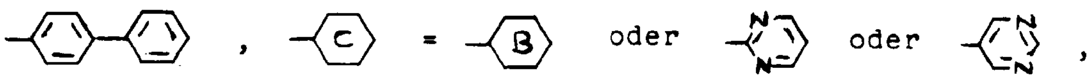

$R^3 = C_rH_{2r+1}$ oder $O-C_rH_{2r+1}$ mit r = 4 bis 15; insbesondere bedeutet die allgemeine Formel (II)

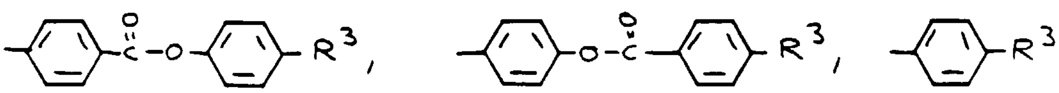

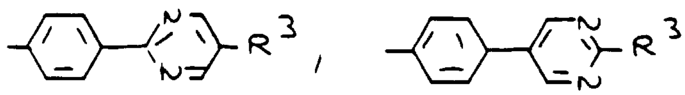

und der Rest $R^1$ oder $R^2$, der nicht durch (II) ausgedrückt wird, bedeutet eine geradkettige oder verzweigte Alkylgruppe mit 2 bis 15 C-Atomen, in der eine $-CH_2$-Gruppe durch -O-, -S-, -CO-O- oder -O-CO- ersetzt sein kann oder weist eine optisch aktive Gruppe mit einem chiralen Baustein aus der Gruppe

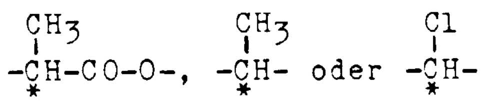

auf.

Zur Herstellung der Verbindungen der allgemeinen Formel (I) wird am Stickstoff geschützte Piperidin-4-carbonsäure in an sich bekannter Weise mit dem entsprechenden Phenol oder Alkohol verestert, und zwar in Gegenwart von Brönstedt- oder Lewis-Säuren, gegebenenfalls in Gegenwart wasserbindender Mittel oder unter Zuhilfenahme von Kondensationsmitteln wie N,N'-Carbonyldiimidazol oder Dicyclohexylcarbodiimid.

Die N-Acylierung als Substitution in 1-Stellung erfolgt nach Abspaltung der Schutzgruppe entweder mit den entsprechenden Carbonsäuren bzw. Carbonsäurechloriden in Gegenwart von Dicyclohexylcarbodiimid bzw. von organischen Basen wie Pyridin oder Triethylamin, oder mit Chlorameisensäurederivaten, die durch Umsetzungen der entsprechenden Phenole bzw. Alkohole mit Phosgen, Diphosgen oder Triphosgen erhalten werden. Die für diese Umsetzungen benötigten Ausgangsverbindungen, z. B. mesogenen Phenole bzw. Hydroxy-Heterocyclen können nach literaturbekannten Verfahren synthetisiert werden (z. B. H. Zaschke et al., Z. Chem. 17, 293 (1977); M. E. Neubert et al., Mol. Cryst. Liq. Crist. 154, 117 (1987), J. W. Goodby, E. Chin, Mol. Cryst. Liq. Cryst. 141, 311 (1986)).

Die erfindungsgemäßen Piperidin-4-carbonsäureester bilden in Flüssigkristallmischungen Flüssigkristall-Phasen.

Unter dem Begriff "Flüssigkristallphase" sind nematische, cholesterische, smektische oder geneigt ("tilted")-smektische, insbesondere $S_c$- und/oder $S^*_c$-Phasen zu verstehen.

Gegenstand der Erfindung ist daher auch die Verwendung der Piperidin-4-carbonsäureester der allgemeinen Formel (I) als Komponenten in smektischen, insbesondere chiralen smektischen, bevorzugt ferroelektrischen Flüssigkristallmischungen.

Die Flüssigkristallmischungen bestehen aus 2 bis 20, vorzugsweise 2 bis 15 Komponenten, darunter mindestens einer der erfindungsgemäßen Verbindungen.

Die anderen Bestandteile werden vorzugsweise ausgewählt aus den bekannten Verbindungen mit nematischen, cholesterischen, smektischen und/oder geneigt-smektischen Phasen; dazu gehören beispielsweise Schiffsche Basen, Biphenyle, Terphenyle, Phenylcyclohexane, Cyclohexylbiphenyle, N, S oder O-haltige Heterocyclen, z. B. Pyrimidine, Zimtsäureester, Cholesterinester, verschiedene überbrückte, terminal-polar mehrkernige Ester von p-Alkylbenzoesäuren. Im allgemeinen liegen die im Handel erhältlichen Flüssigkristallmischungen bereits vor der Zugabe der erfindungsgemäßen Verbindung(en) als Gemische verschiedenster Komponenten vor, von denen mindestens eine mesogen ist, d. h. als Verbindung, in derivatisierter Form oder im Gemisch mit bestimmten Cokomponenten eine Flüssigkristallphase zeigt, die mindestens eine enantiotrope (Klärtemperatur > schmelztemperatur) oder monotrope (Klärtemperatur < Schmelztemperatur) Mesophasenbildung erwarten läßt.

Insbesondere enthält die Flüssigkristallmischung neben mindestens einer der erfindungsgemäß beanspruchten Verbindungen eine Esterverbindung mit $S_c$-Phase, z. B. einen Alkoxybenzoesäurephenylester, oder eine biaromatische Verbindung mit einem stickstoffhaltigen Heterocyclus, z. B. ein Alkylpyrimidinyl-alkoxy-benzol und/oder eine optisch aktive Verbindung, die in der Mischung eine $S^*_c$- oder cholesterische Phase zu induzieren vermag.

Von der oder den erfindungsgemäßen Verbindung(en) enthalten die Flüssigkristallmischungen im allgemeinen 0,05 bis 80 Gew.-%, insbesondere 0,1 bis 60 Gew.-%.

Die erfindungsgemäßen Verbindungen sind mit vielen der bekannten Komponenten gut zu Mischungen zu verarbeiten. Außerdem lassen sie sich in großer Variationsbreite und in guten Ausbeuten aus der auch in größeren Mengen im Handel erhältlichen Ausgangssubstanz herstellen.

Gegenstand der Erfindung ist weiterhin einelektrooptisches Bauteil, enthaltend eine der oben beschriebenen Flüssigkristallmischungen.

In den nachfolgenden Beispielen verhalten sich Gew.-Teile zu Vol.-Teilen wie kg zu 1; %-Angaben beziehen sich - wenn nichts anderes angegeben ist - auf das Gewicht.

**Beispiel 1**

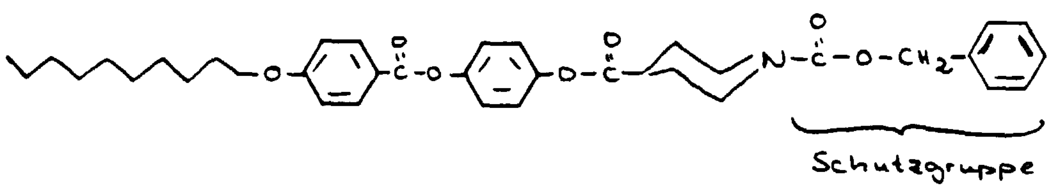


1-Carbobenzoxy-piperidin-4-carbonsäure[4-(4-decyloxy-benzoyl)-oxyphenyl]ester

34 Gew.-Teile Carbobenzoxy-piperidin-4-carbonsäure und

48 Gew.-Teile 4-(4-Decyloxybenzoyloxy)phenol werden in 600 Vol.-Teilen Methylenchlorid gelöst; unter Zugabe von 2 Gew.-Teilen 4-Pyrrolidino-pyridin und 31 Gew.-Teilen Dicyclohexylcarbodiimid wird 25 h bei 0 bis 5°C gerührt. Es wird vom ausgefallenen Dicyclohexylharnstoff abgesaugt (29 Gew.-Teile). Das Lösemittel wird im Vakuum abgezogen, der Rückstand beträgt 88,5 Gew.-Teile an Rohprodukt. Aus 100 Vol.-Teilen Ethanol umkristallisiert erhält man 67 Gew.-Teile weiße Kristalle vom Schmp.: 79 bis 80°C.

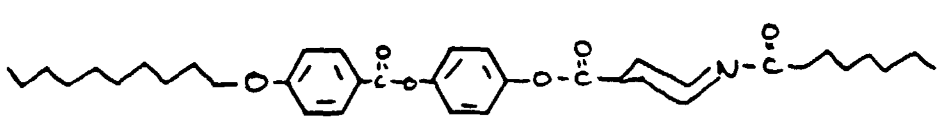

1-n-Octanoyl-piperidin-4-carbonsäure[4-(4-decyloxy-benzoyl)-oxyphenyl]ester 3,7 Gew.-Teile der vorstehenden Verbindung werden mit 5 Vol.-Teilen Eisessig und 5 Vol.-Teilen Eisessig/HBr (33 %ig) bei Raumtemperatur gerührt, bis die Kohlendioxidentwicklung aufgehört hat (ca. 1 h). Man versetzt mit 70 Vol.-Teilen Diisopropylether, rührt während 2 h, saugt das ausgefallene Produkt ab, wäscht mit Diisopropylether und löst den noch feuchten Rückstand in 80 Vol.-Teilen Methylenchlorid. Man versetzt die Lösung mit 0,98 Gew.-Teilen Octansäurechlorid und kühlt unter Stickstoff auf 0 bis 5°C ab. Danach gibt man 2 Vol.-Teile Triethylamin in 8 Vol.-Teilen Methylenchlorid langsam zu, rührt während 15 min. bei 5°C und 1,5 h bei Raumtemperatur. Das Lösemittel wird im Vakuum abgezogen; es verbleiben 5,4 Gew.-Teile Rückstand. Der Rückstand wird an einer Säule (240 Gew.-Teile Kieselgel, Laufmittel $CH_2Cl_2$ + 10 % Methanol) chromatographiert. Man erhält eine Fraktion, die nach Abziehen des Lösemittels 3,2 Gew.-Teile Produkt ergibt. Nach zweimaligem Umkristallisieren aus Methanol verbleiben 2,7 Gew.-Teile der Verbindung als farblose Kristalle.
K 65 $S_X$ 88 $S_c$ 110 $S_A$ 125 I

Analog werden die nachfolgenden Verbindungen (Bsp. 2 bis 17) erhalten:

**Beispiel 2**

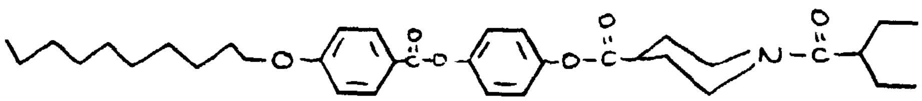

1-(2-Ethyl-butyroyl)-piperidin-4-carbonsäure[4-(4-decyloxy-benzoyl)-oxyphenyl]ester
K 74 N 89,5 I (I 89 N 65,5 $S_A$ 42 $S_c$ 39 K)

**Beispiel 3**

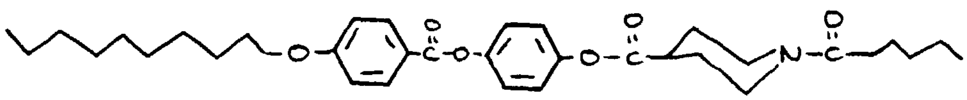

1-Hexanoyl-piperidin-4-carbonsäure[4-(4-decyloxy-benzoyl)-oxyphenyl]ester
K 52 $S_X$ 86 $S_A$ 120 I

**Beispiel 4**

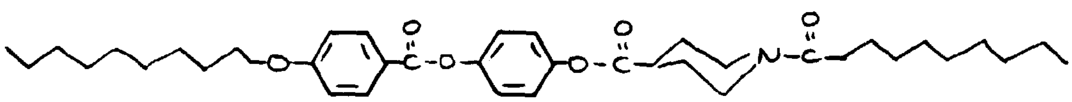

1-Decanoyl-piperidin-4-carbonsäure[4-(4-decyloxy-benzoyl)-oxyphenyl]ester
K 74 $S_B$ 89,9 $S_c$ 124 $S_A$ 126,9 I

**Beispiel 5**

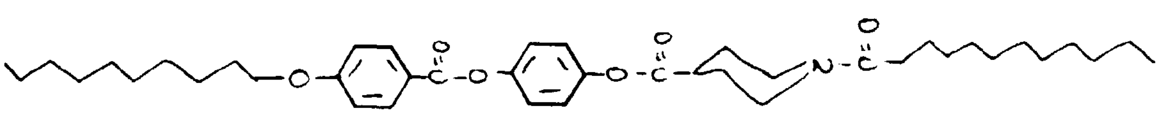

1-Dodecanoyl-piperidin-4-carbonsäure[4-(4-decyloxy-benzoyl)-oxyphenyl]ester
K 93 $S_c$ 127,5 I

**Beispiel 6**

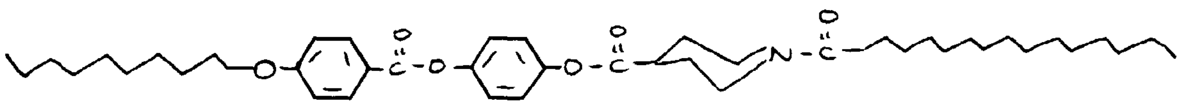

1-Palmitoyl-piperidin-4-carbonsäure[4-(4-decyloxy-benzoyl)-oxyphenyl]ester
K 93 $S_c$ 129 I

**Beispiel 7**

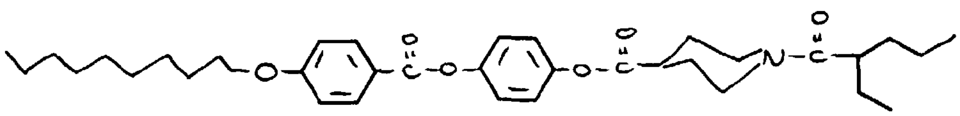

1-(2-Ethyl-pentanoyl)piperidin-4-carbonsäure[4-(4-decyloxy-benzoyl)-oxyphenyl]ester
K 53 N 76 I

**Beispiel 8**

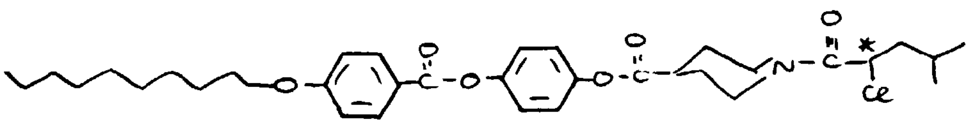

1-[(S)-2-Chlor-4-methyl-pentanoyl]-piperidin-4-carbonsäure-[4-(t-decyloxy-benzoyl)-oxyphenyl]ester
$[\alpha]_D^{21}$ : +14,1 (c = 1; $CH_2Cl_2$) Schmp. 109° C
(I 97 $S_A$ 77 $S_c$ 68 K)

Meßmethode: Versetzt man ein (nicht-chirales) Lösemittel mit einer kleinen Menge einer chiralen Verbindung, so wird die Ebene des linear polarisierten Lichts um den (charakteristischen) Winkel α gedreht; dieser Winkel wird wie folgt angegeben: $[\alpha]_D^T$ (c = x, LM), wobei die Symbole folgende Bedeutung haben: x = Konzentration der Lösung in g/l, LM = Lösemittel, D = 589 nm (NaD-Linie), T = temperatur der Lösung. Der Drehwinkel wird in einem Polarimeter nach 10 cm Durchgang des Lichts bestimmt.

**Beispiel 9**

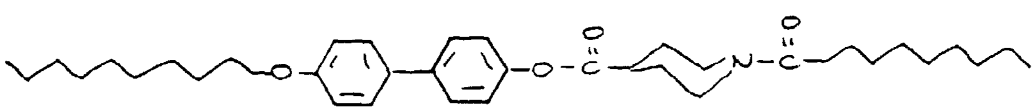

1-Decanoyl-piperidin-4-carbonsäure-(4'-decyloxy-biphenyl-4-yl)-ester
K 87 $S_B$ 132 $S_A$ 140 I

**Beispiel 10**

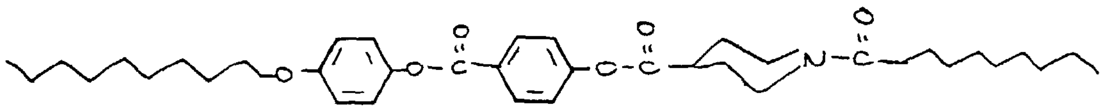

1-Decanoyl-piperidin-4-carbonsäure[4-(4-decyloxy-phenyloxy)carbonylphenyl]ester
K 102 $S_A$ 142 I

**Beispiel 11**

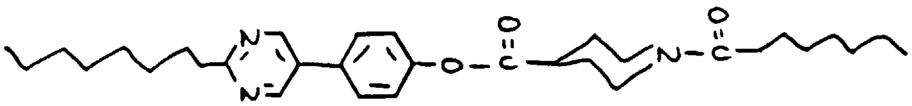

1-Octanoyl-piperidin-4-carbonsäure[4-(2-octyl-pyrimidin-5-yl)-phenyl]ester
K 75 $S_X$ 82,5 $S_c$ 88 I

**Beispiel 12**

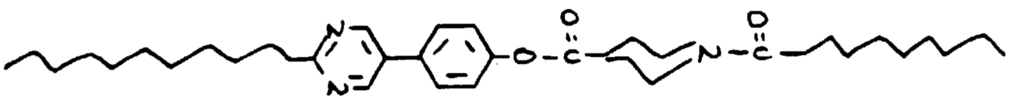

1-Decanoyl-piperidin-4-carbonsäure[4-(2-undecyl-pyrimidin-5-yl)-phenyl]ester
K 90 $S_c$ 102 I

**Beispiel 13**

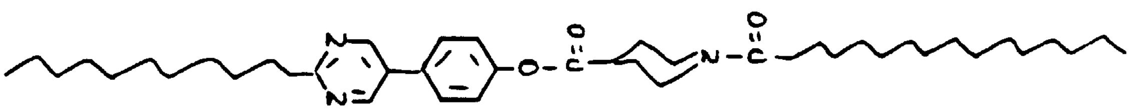

1-Palmitoyl-piperidin-4-carbonsäure[4-(2-undecyl-pyrimidin-5-yl)-phenyl]ester
K 82 $S_c$ 102 I

**Beispiel 14**

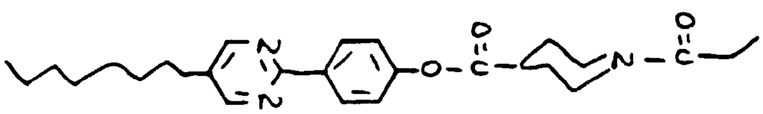

1-Propionyl-piperidin-4-carbonsäure[4-(5-octyl-pyrimidin-2-yl)-phenyl]ester
Schmp. 75°C

**Beispiel 15**

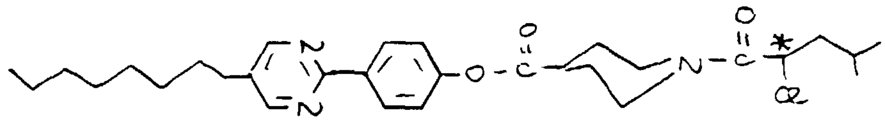

1-[(S)-2-Chlor-4-methyl-pentanoyl]-piperidin-4-carbonsäure [4-(5-octylpyrimidin-2-yl)phenyl]ester
Schmp. 96°C
$[\alpha]_D^{23}$ : +16,5 (c = 1; $CH_2Cl_2$)

**Beispiel 16**

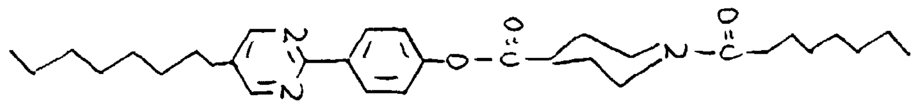

1-Octanoyl-piperidin-4-carbonsäure[4-(5-octylpyrimidin-2-yl)-phenyl]ester
Schmp. 100°C (I 87 $S_X$ 60 K)

**Beispiel 17**

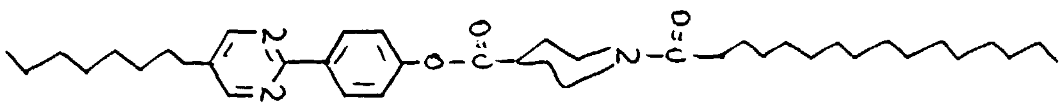

1-Palmitoyl-piperidin-4-carbonsäure[4-(5-octylpyrimidin-2-yl)-phenyl]ester
K 90 $S_X$ 95 $S_c$ 96,6 I

**Beispiel 18**

Es wird wie in Beispiel 1 verfahren, nur anstelle der Reaktionskomponente Alkansäurechlorid der entsprechende Chlorameisensäureester eingesetzt.

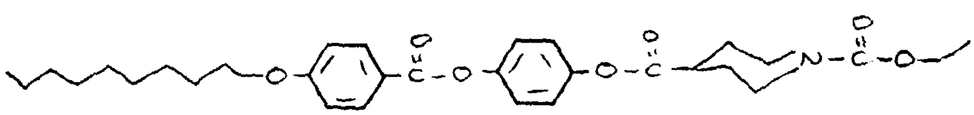

1-Ethoxycarbonyl-piperidin-4-carbonsäure[4-(4-decyloxy-benzoyl)-oxyphenyl]ester
K 75 $S_c$ 87 N 90 I

Analog werden die nachfolgenden Verbindungen (Bsp. 19 bis 29) erhalten:

**Beispiel 19**

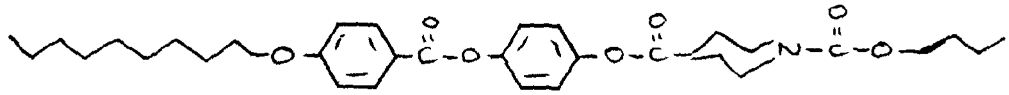

1-Butyloxycarbonyl-piperidin-4-carbonsäure[4-(4-decyloxy-benzoyl)-oxyphenyl]ester
K 45 $S_B$ 51,4 $S_c$ 79,2 $S_A$ 83,6 I

**Beispiel 20**

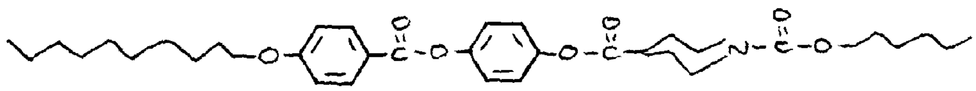

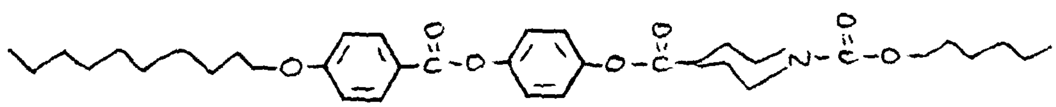

1-Hexyloxycarbonyl-piperidin-4-carbonsäure[4-(4-decyloxy-benzoyl)-oxyphenyl]ester
K 40 $S_X$ 47,5 $S_c$ 78,5 I

**Beispiel 21**

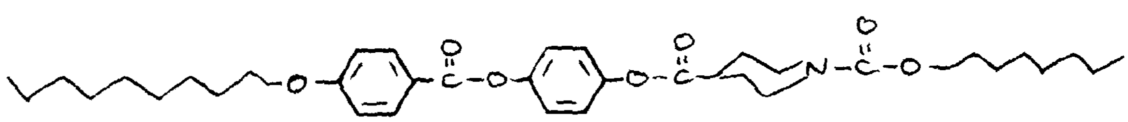

1-Octyloxycarbonyl-piperidin-4-carbonsäure[4-(4-decyloxy-benzoyl)-oxyphenyl]ester
K 68 $S_c$ 81,6 I

**Beispiel 22**

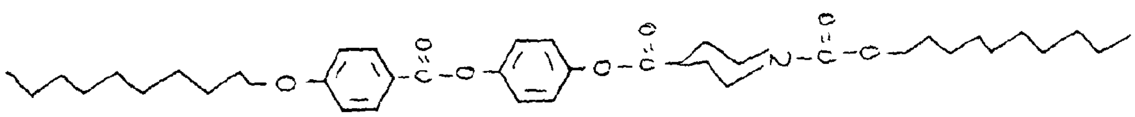

1-Decyloxycarbonyl-piperidin-4-carbonsäure[4-(d-decyloxy-benzoyl)-oxyphenyl]ester
K 62 $S_X$ 73,8 $S_c$ 83,3 I

**Beispiel 23**

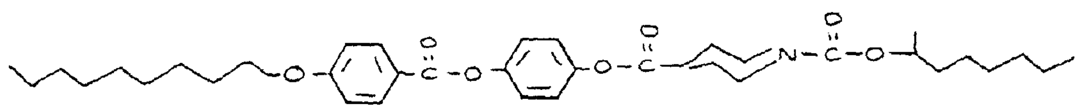

1-[(S)-1-Methyl-heptyl]oxycarbonyl-piperidin-4-carbonsäure [4-(4-decyloxy-benzoyl)-oxyphenyl]ester
$[\alpha]_D^{25}$ : +10,8 (c = 1; $CH_2Cl_2$)
K 53,5 $S_A$ 63 I

**Beispiel 24**

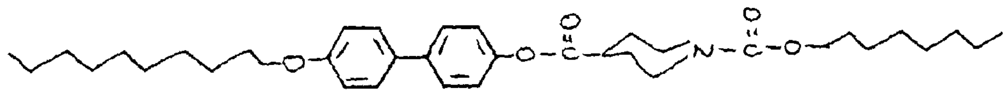

1-Octyloxycarbonyl-piperidin-4-carbonsäure(4'-decyloxy-biphenyl-4-yl)ester
K 87 $S_X$102 I

**Beispiel 25**

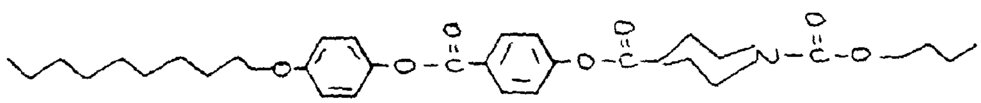

1-Butyloxycarbonyl-piperidin-4-carbonsäure[4-(4-decyloxy-phenyloxy)carbonylphenyl]ester
K 80 $S_A$ 103 I (I 103 $S_A$ 65 $S_c$ 53 I)

**Beispiel 26**

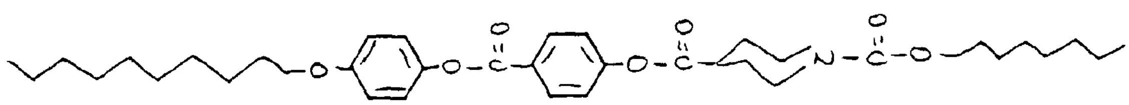

1-Octyloxycarbonyl-piperidin-4-carbonsäure[4-(4-decyloxy-phenyloxy)carbonylphenyl]ester
K 80,3 $S_c$ 81,4 $S_A$ 94 I

**Beispiel 27**

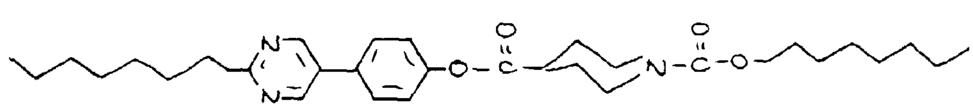

1-Ocetyloxycarbonyl-piperidin-4-carbonsäure[4-(2-octylpyrimidin-5-yl)-phenyl]ester
Schmp. 68°C (I 64 $S_A$ 63,3 $S_c$ 62 $S_X$ 60 K)

**Beispiel 28**

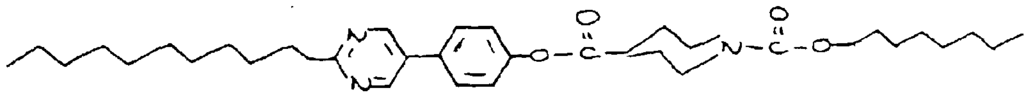

1-Octyloxycarbonyl-piperidin-4-carbonsäure[4-(2-undecylpyrimidin-5-yl)-phenyl]ester
Schmp. 74°C (I 74 $S_c$ 72 $S_X$ 69 K)

**Beispiel 29**

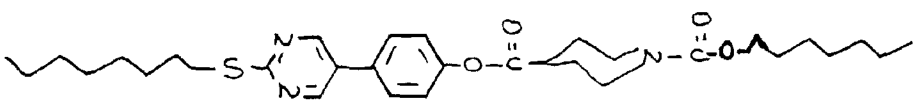

1-Octyloxycarbonyl-piperidin-4-carbonsäure[4-(2-octylthiopyrimidin-5-yl)-phenyl]ester
Schmp. 82°C

**Beispiel 30**

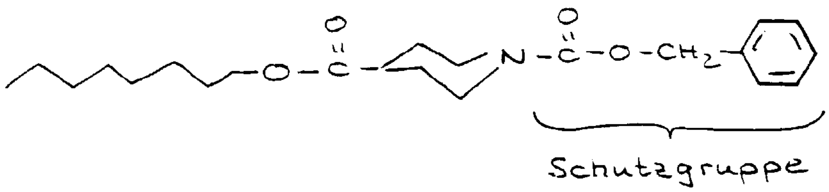


(A)

1-Carbobenzoxy-piperidin-4-carbonsäure-octylester = (A)
13,2 Gew.-Teile 1-Carbobenzoxy-piperidin-4-carbonsäure werden in 150 Vol.-Teilen Methylenchlorid gelöst, mit 8 Vol.-Teilen n-Octanol und 0,7 Gew.-Teilen 4-Pyrrolidinopyridin versetzt und auf 0 bis 5°C gekühlt. 12,0 Gew.-Teile Dicyclohexylcarbodiimid werden zugegeben, es wird 2 h bei 5°C und 4 h bei Raumtemperatur gerührt. Nach Stehen über Nacht wird vom ausgefallenen Dicyclohexylharnstoff abgesaugt (11,3 Gew.-Teile), das Lösemittel im Vakuum abgezogen, der Rückstand zur Entfernung restlichen Dicyclohexylharnstoffs mit Diisopropylether verrührt, filtriert und das Lösemittel abgezogen. Man erhält 21 Gew.-Teile eines öligen Rückstands. Der Rückstand wird an 1070 Gew.-Teilen Kieselgel mit $CH_2Cl_2$/5 % Methanol chromatographiert. Man erhält 9,8 Gew.-Teile der Verbindung (A) als Öl.

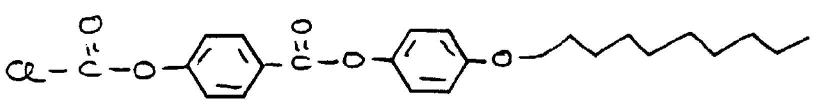

(B)

Chlorameisensäure[4-(4-decyloxy-phenoxy)carbonylphenyl)]ester = (B)
2,25 Gew.-Teile 4-Hydroxy-benzoesäure-(4-decyloxyphenyl)ester werden mit 50 Vol.-Teilen Methylenchlorid und 1,14 Vol.-Teilen N,N-Dimethylanilin versetzt. Unter Rühren werden 1,02 Vol.-Teile Diphosgen zugegeben. Die blaue Lösung steht bei Raumtemperatur über Nacht und wird anschließend im Wasserstrahlvakuum eingeengt. Man erhält 3,85 Gew.-Teile (B) als festen Rückstand.

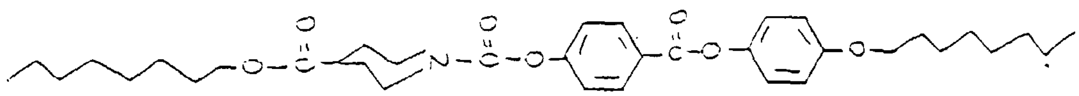

(C)

1-[4-(4-Decyloxy-phenyloxy)carbonylphenyloxy]carbonyl-piperidin-4-carbonsäure-octylester = (C)

1,5 Gew.-Teile von (A) werden mit 3 Vol.-Teilen Eisessig und 3 Vol.-Teilen Eisessig/HBr (33 %ig) versetzt und 1 h bei Raumtemperatur gerührt ($CO_2$-Entwicklung). Das Lösemittel wird zunächst an der Wasserstrahlpumpe, dann bei ca. 1 mbar abgezogen; es verbleiben 1,5 g eines gelben Öls als Zwischenverbindung, die dann in 25 Vol.-Teilen Methylenchlorid gelöst und mit einer Lösung von 1,6 Gew.-Teilen (B) in 25 Vol.-Teilen Methylenchlorid vereinigt und auf 0°C gekühlt wird. unter Stickstoff werden dann 1,4 Vol.-Teile Triethylamin in 4 Vol.-Teilen Methylenchlorid langsam zugetropft. 3ei 0°C wird während 15 min und bei Raumtemperatur 2 h nachgerührt. Die Lösung wird mit 20 Vol.-Teilen 1n-Salzsäure und 2 mal mit Wasser ausgeschüttelt. Nach Trocknen über Magnesiumsulfat wird filtriert und das Lösemittel im Vakuum abgezogen. an erhält 1,7 Gew.-Teile von (C) als festen Rückstand, der über 180 Gew.-Teilen Kieselgel mit Methylenchlorid/ 3 % Methanol chromatographiert wird. Man erhält eine einheitliche Fraktion von 0,55 Gew.-Teilen, die aus 15 Vol.-Teilen Methanol umkristallisiert 0,45 Gew.-Teile an (C) ergeben. Schmp. 66 - 68°C (I 62 N 57 K)

Analog werden die nachfolgenden Verbindungen (Bsp. 31 bis 39) hergestellt:

**Beispiel 31**

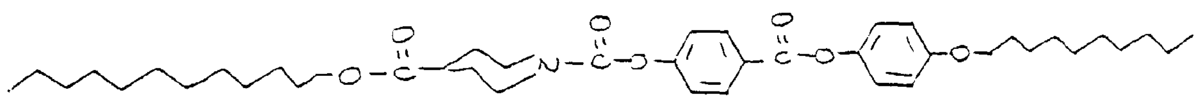

1-[4-(4-Decyloxy-phenyloxylcarbonylphenyloxy]carbonyl-piperidin-4-carbonsäure-dodecylester
Schmp. 70 - 72°C (I 69 S 54 K)

**Beispiel 32**

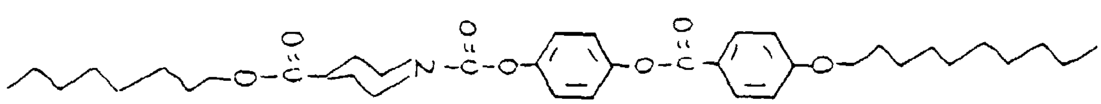

1-[4-(4-Decyloxy-benzoyloxy)phenoxy]carbonyl-piperidin-4-carbonsäure-octylester
Schmp. 64°C (I 57 N 47 $S_c$ 35 K)

**Beispiel 33**

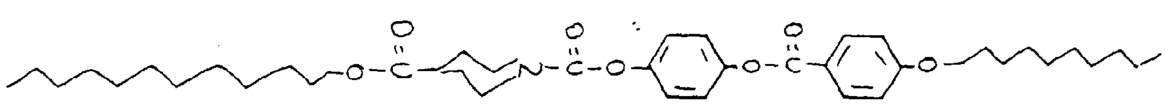

1-[4-(4-Decyloxy-benzoyloxy)phenoxy]carbonyl-piperidin-4-carbonsäure-dodecylester
Schmp. 73°C (I 68 N 60 $S_c$ 50 K)

**Beispiel 34**

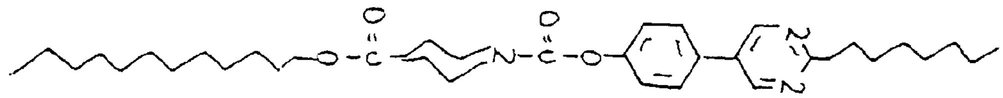

1-[4-(2-Octylpyrimidin-5-yl-)phenoxy]carbonyl-piperidin-4-carbonsäure-dodecylester
Schmp. 87°C (I 86 S 54 K)

**Beispiel 35**

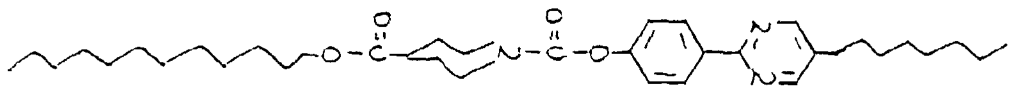

1-[4-(5-Octylpyrimidin-2-yl-)phenyloxy]carbonyl-piperidin-4-carbonsäure-dodecylester
Schmp. 76°C

**Beispiel 36**

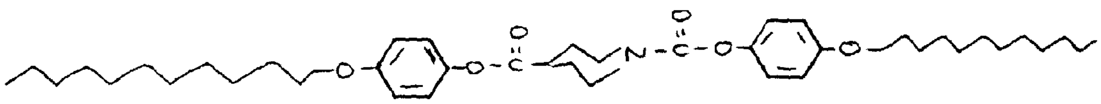

1-(4-Dodecyloxy-phenyloxy)-carbonyl-piperidin-4-carbonsäure(4-dodecyloxy-phenyl)ester
Schmp. 97°C (I 89 $S_c$ 87,5 K)

**Beispiel 37**

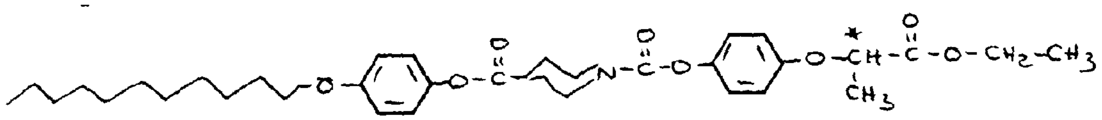

1-[4-<(S)-1-Ethoxycarbonyl-ethyloxy>phenyl]oxycarbonyl-piperidin-4-carbonsäure(4-dodecyloxyphenyl)ester
Schmp. 54°C
$[\alpha]_D^{21}$ = -19,2° (c = 1; $CH_2Cl_2$)

**Beispiel 38**

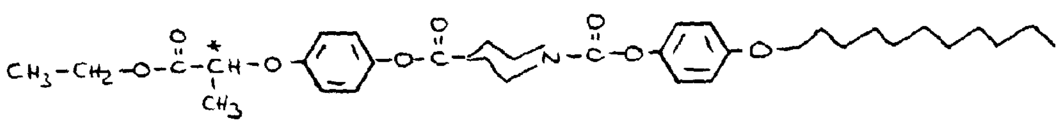

1-(4-Dodecyloxy-phenyloxy)carbonyl-piperidin-4-carbonsäure[4-<(S)-1-ethoxycarbonyl-ethyloxy>phenyl]ester
Schmp. 46°C
$[\alpha]_D^{21}$ = -19,5 (c = 1; $CH_2Cl_2$)

**Beispiel 39**

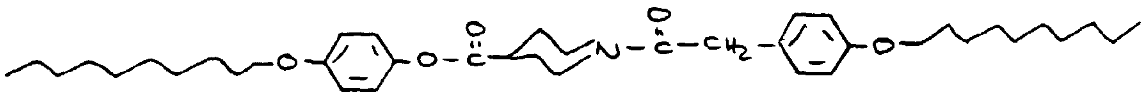

1-(4-Decyloxy-phenacetyl)-piperidin-4-carbonsäure-(4-decyloxy-phenyl)ester
K 102 $S_A$ 105 I

**Patentansprüche**

**1.** Flüssigkristalline, in 1-Stellung substituierte Piperidin-4-carbonsäureester der allgemeinen Formel (I),

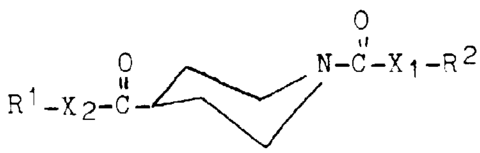

(I)

in der $R^1$ oder $R^2$ einen Rest der allgemeinen Formel (II) bedeutet

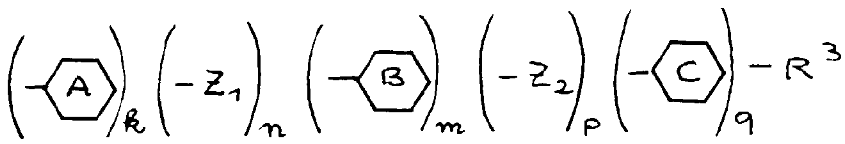

(II)

und im übrigen die Substituenten, Bausteine und Indices folgende Bedeutung haben:

| | |
|---|---|
| k,n,m,p,q | Null oder 1, jedoch p = Null wenn m = Null und k + m + q mindestens 1 |
| $Z_1$ | CO-O, O-CO, $(CH_2)_2$, $OCH_2$, $CH_2O$, CO-S, S-CO |
| $Z_2$ | $Z_1$ oder $CH_2$, N = N, N = N(O) |
| $X_1$ | O, S oder $CH_2$ oder Phenylenoxy (bei $R^1$ = (II)) |
| $X_2$ | O O oder Phenylenoxy (bei $R^2$ = (II)) |

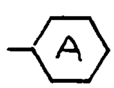 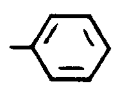 oder 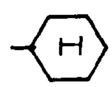

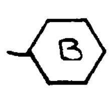 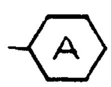 oder 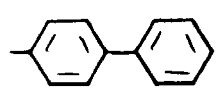

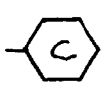 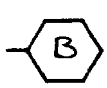 oder 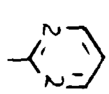, 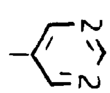, 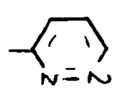, 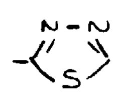, 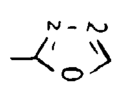,

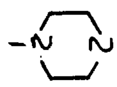, 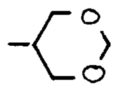, 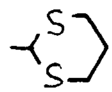, 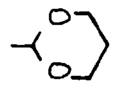, 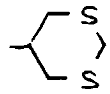, 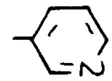

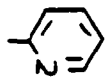, 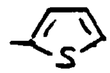, 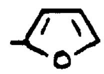, 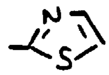, 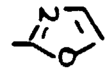,

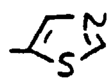, 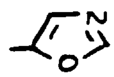

$R^3$ $C_rH_{2r+1}$, $O\text{-}C_rH_{2r+1}$, $S\text{-}C_rH_{2r+1}$, $CO\text{-}C_rH_{2r+1}$, $O\text{-}CO\text{-}C_rH_{2r+1}$ oder $CO\text{-}O\text{-}C_rH_{2r+1}$, wobei r eine ganze Zahl von 1 bis 20

und in welcher der Rest $R^1$ oder $R^2$, der nicht durch die allgemeine Formel (II) ausgedrückt wird, eine geradkettige oder verzweigte, durch F, Cl, Br oder CN substituierte oder unsubstituierte Alkylgruppe mit 1 bis 20 C-Atomen bedeutet, in der eine oder zwei nichtbenachbarte $-CH_2$-Gruppen ersetzt sein können durch -O-, -S-, -CO-, -O-CO-, -CO-O, -O-CS-, -CO-S- und/oder -CH=CH-, oder die eine Endgruppe $-CH=CH_2$ oder $-CH=C(CH_3)_2$ oder

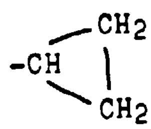

oder oder eine optisch aktive Gruppe mit einem chiralen Baustein aus der Gruppe

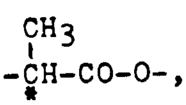, 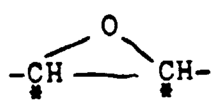, 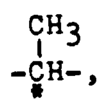, 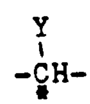 oder 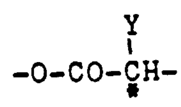

mit Y = F, Cl, Br oder CN aufweist.

**2.** Ausführungsform nach Anspruch 1, dadurch gekennzeichnet, daß in den allgemeinen Formeln (I) und (II) bedeuten: bei k, n = Null sind m, p, q = Null oder 1 und m + q mindestens 1, $Z_2$ = CO-O, O-CO oder $CH_2$, $X_1$ = O, $CH_2$ oder Phenylenoxy,

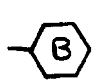 = 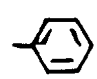

oder

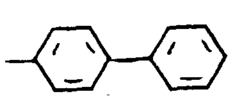, 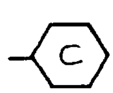 = 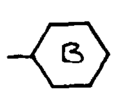 oder 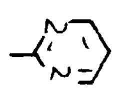 oder 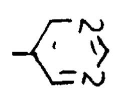,

$R^3 = C_rH_{2r+1}$ oder $O\text{-}C_rH_{2r+1}$ mit r = 4 bis 15.

**3.** Ausführungsform nach Anspruch 2, dadurch gekennzeichnet, daß die allgemeine Formel (II)

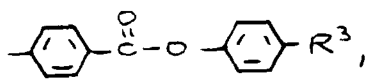 , 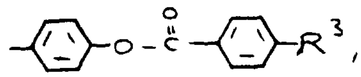 , 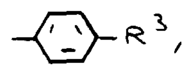 ,

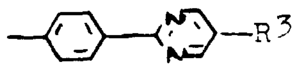 , 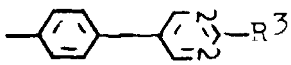

bedeutet und der Rest $R^1$ oder $R^2$, der nicht durch (II) ausgedrückt wird, eine geradkettige oder verzweigte Alkylgruppe mit 2 bis 15 C-Atomen bedeutet, in der eine $-CH_2$-Gruppe durch -O-, -S-, -CO-O- oder -O-CO- ersetzt sein kann oder die eine optisch aktive Gruppe mit einem chiralen Baustein aus der Gruppe

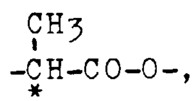 , 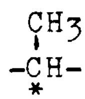 oder 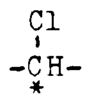

aufweist.

**4.** Verfahren zur Herstellung der Piperidin-4-carbonsäureester der allgemeinen Formel (I) nach Anspruch 1, dadurch gekennzeichnet, daß eine am Stickstoff geschützte Piperidin-4-carbonsäure zuerst mit einem Phenol oder Alkohol der Formel $R^1\text{-}X_2\text{-}H$ verestert und anschließend unter Abspaltung der Schutzgruppe mit einer Carbonsäure oder einem Carbonsäurechlorid der Formel $R^2\text{-}X_1\text{-}CO\text{-}OH$ oder $R^2\text{-}X_1\text{-}CO\text{-}Cl$ N-acyliert wird.

**5.** Verwendung der Piperidin-4-carbonsäureester der allgemeinen Formel (I) nach Anspruch 1 als Komponenten in smektischen, insbesondere chiralen smektischen, bevorzugt ferroelektrischen Flüssigkristallmischungen.

**6.** Flüssigkristalline Mischung enthaltend mindestens einen Piperidin-4-carbonsäureester der allgemeinen Formel (I) nach Anspruch 1.

**7.** Elektrooptisches Bauteil enthaltend eine flüssigkristalline Mischung nach Anspruch 6.

## Claims

**1.** A liquid-crystalline, 1-substituted piperidine-4-carboxylic ester of the general formula (I)

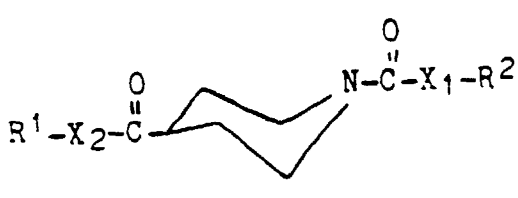 (I)

in which $R^1$ or $R^2$ is a radical of the general formula (II)

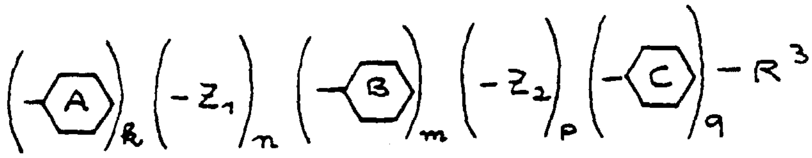 (II)

and the substituents, units and indices otherwise have the following meanings:

| | |
|---|---|
| k,n,m,p and q | are zero or 1, but p = zero when m = zero and k + m + q is at least 1, |
| $Z_1$ | is CO-O, O-CO, $(CH_2)_2$, $OCH_2$, $CH_2O$, CO-S or S-CO, |
| $Z_2$ | is $Z_1$ or $CH_2$, N = N or N = N(O), |
| $X_1$ | is O, S or $CH_2$ or phenyleneoxy (in the case where $R^1$ = (II)), |
| $X_2$ | is O or phenyleneoxy (in the case where $R^2$ = (II)), |

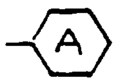 is 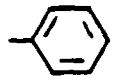 or 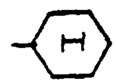 ,

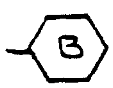 is 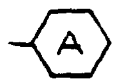 or 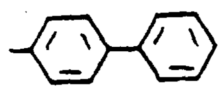 ,

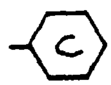 is 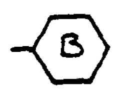 or

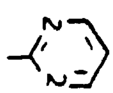 , 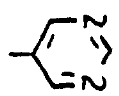 , 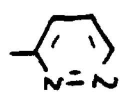 , 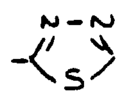 , 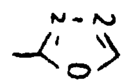 ,

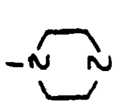 , 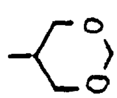 , 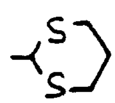 , 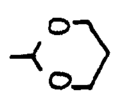 , 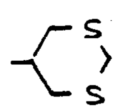 , 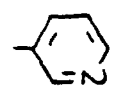

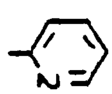 , 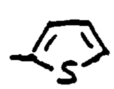 , 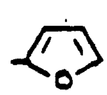 , 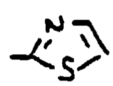 , 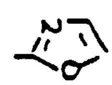 ,

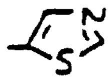, 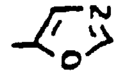

$R^3$ is $C_rH_{2r+1}$, $O$-$C_rH_{2r+1}$, $S$-$C_rH_{2r+1}$, $CO$-$C_rH_{2r+1}$, $O$-$CO$-$C_rH_{2+1}$ or $CO$-$O$-$C_rH_{2r+1}$, where r is an integer from 1 to 20,

and in which the radical $R^1$ or $R^2$ not expressed by the general formula (II) is a straight-chain or branched, F-, Cl-, Br- or CN-substituted or unsubstituted alkyl group having 1 to 20 carbon atoms in which one or two non-adjacent $-CH_2$ - groups may be replaced by -O-, -S-, -CO-, -O-CO-, -CO-O-, -O-CS-, -CO-S- and/or -CH=CH-, or which contains a terminal group $-CH=CH_2$ or $-CR=C(CR_3)_2$ or

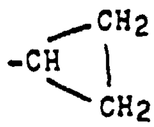

or an optically active group containing a chiral unit from the group consisting of

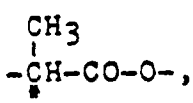, 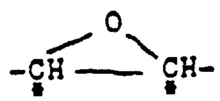, 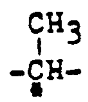, 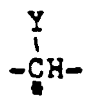 or 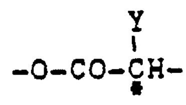

where Y = F, Cl, Br or CN.

2. An embodiment as claimed in Claim 1, wherein, in the general formulae (I) and (II) :
in the case where k and n = zero, m, p and q = zero or l and m + q is at least 1, $Z_2$ = CO-O, O-CO or $CH_2$, $X_1$ = O, $CH_2$ or phenyleneoxy,

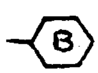 = 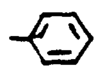

or

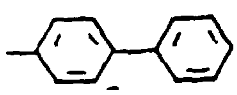, 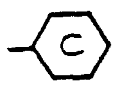 = 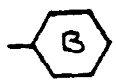 or 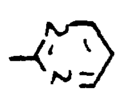 or 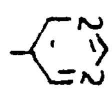, ,

$R^3$ = $C_rH_{2r+1}$ or $O$-$C_rH_{2r+1}$, where r = 4 to 15.

3. An embodiment as claimed in Claim 2, wherein the general formula (II) is

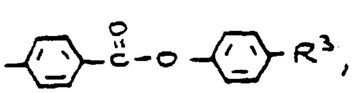, 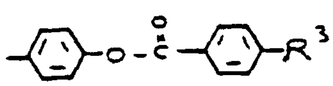, 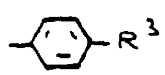,

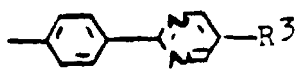, 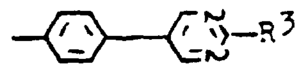

and the radical $R^1$ or $R^2$ which is not expressed by (II) is a straight-chain or branched alkyl group having 2 to 15 carbon atoms in which one $-CH_2-$ group may be replaced by -O-, -S-, -CO-O- or -O-CO- or which contains an optically active group containing a chiral unit selected from the group of

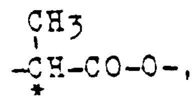

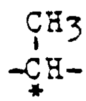 and 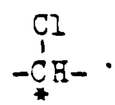

4. A process for the preparation of a piperidine-4-carboxylic ester of the general formula (I) as claimed in Claim I, which comprises first esterifying a nitrogen-protected piperidine-4-carboxylic acid by means of a phenol or alcohol of the formula $R^1$-$X_2$-H, and subsequently N-acylating the ester by means of a carboxylic acid or a carboxylic acid chloride of the formula $R^2$-$X_1$-CO-OH or $R^2$-$X_1$-CO-Cl with removal of the protecting group.

5. The use of a piperidine-4-carboxylic ester of the general formula (I) as claimed in Claim 1 as a component of smectic, in particular chiral smectic, preferably ferroelectric liquid-crystal mixtures.

6. A liquid-crystalline mixture containing at least one piperidine-4-carboxylic ester of the general formula (I) as claimed in Claim 1.

7. An electro-optical component containing a liquid-crystalline mixture as claimed in Claim 6.

**Revendications**

1. Phase de cristal liquide d'esters de l'acide pipéridine-4-carboxylique substitués en position 1, de formule générale (I)

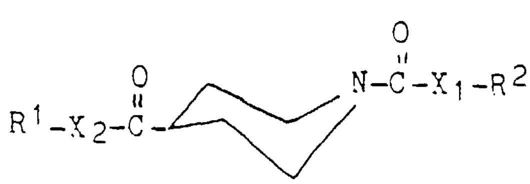

(I)

dans laquelle $R^1$ ou $R^2$ représentent un radical de formule générale (II)

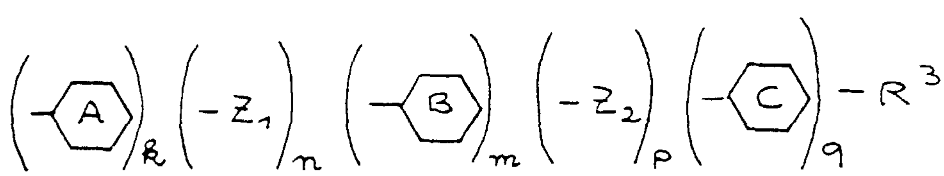

(II)

et au demeurant, les substituants, les éléments de base et les indices ont la signification suivante :

| | |
|---|---|
| k, n, m, p, q | sont zéro ou 1, mais p = zéro quand m = zéro et k + m + q sont au moins 1. |
| $Z_1$ | CO-O, O-CO, $(CH_2)_2$, $OCH_2$, $CH_2O$, CO-S, S-CO, |
| $Z_2$ | $Z_1$ ou $CH_2$, N=N, N=N(O), |
| $X_1$ | O, S ou $CH_2$ ou phényloxy (pour $R^1$ = (II)) |
| $X_2$ | O ou phényloxy (pour $R^2$ = (II)) |

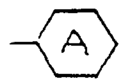 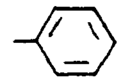 ou 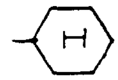

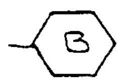 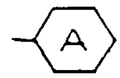 ou 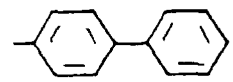

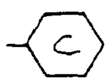 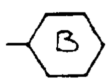 ou 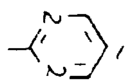, 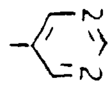, 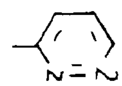, 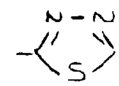, 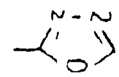,

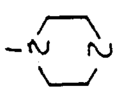, 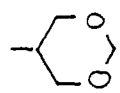, 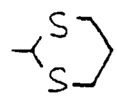, 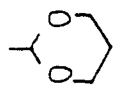, 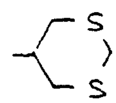, 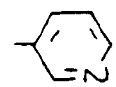

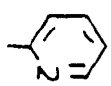, 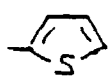, 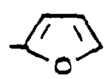, 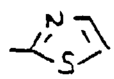, 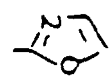,

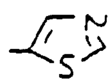, 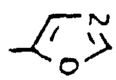

| | |
|---|---|
| $R^3$ | $C_rH_{2r+1}$, $O-C_rH_{2r+1}$, $S-C_rH_{2r+1}$, $CO-C_rH_{2r+1}$, $O-CO-C_rH_{2r+1}$ ou $CO-O-C_rH_{2r+1}$, r étant un nombre entier de 1 à 20 |

et dans laquelle le radical $R^1$ ou $R^2$, qui n'est pas exprimé par la formule générale II, représente un groupe alkyle avec 1 à 20 atomes de carbone non substitué ou substitué par F, Cl, Br ou CN, dans lequel un ou deux groupes $-CH_2-$ non voisins peuvent être remplacés par -O-, -S-, -CO-, -O-CO-, -CO-O-, -O-CS-, -CO-S- et/ou -CH=CH-, ou un groupe terminal $-CH=CH_2$ ou $-CH=C(CH_3)_2$ ou

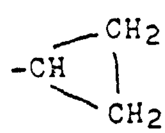

ou présentant un groupe optiquement actif avec un constituant chiral pris dans le groupe

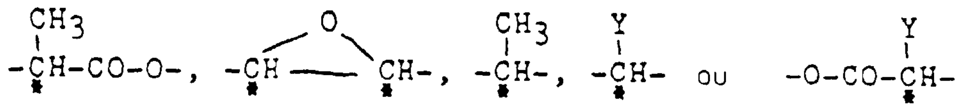

avec Y = F, Cl, Br ou CN.

2. Mode de réalisation selon la revendication 1, caractérisé en ce que dans les formules générales (I) et (II) sont : pour k, n = 0, m, p, q = 0 ou 1 et m + q sont au moins 1, $Z_2$ = CO-O, O-CO ou $CH_2$, $X_1$ = O, $CH_2$ ou phénylènoxy

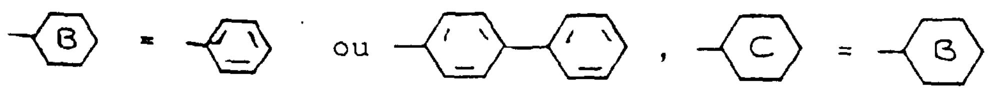

ou

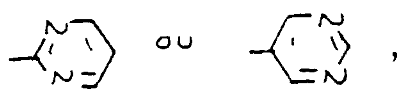

$R^3 = C_rH_{2r+1}$ ou $O\text{-}C_rH_{2r+1}$, avec r = 4 à 15.

3. Mode de réalisation selon la revendication 2, caractérisé en ce que la formule générale (II) représente

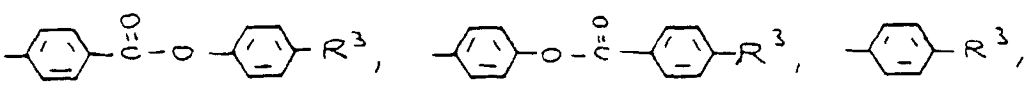

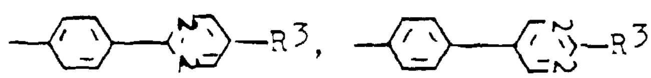

et le radical $R^1$ ou $R^2$, qui n'est pas exprimé par la formule (II), représente un groupe alkyle avec 2 à 15 atomes de carbone linéaire ou ramifié, dans lequel un groupe $-CH_2$-peut être remplacé par -O-, -S-, -CO-O ou -O-CO- ou l'un des groupes optiquement actifs comportant un constituant chiral pris dans le groupe présente

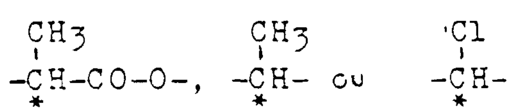

4. Procédé pour la préparation de pipéridine-4-carboxylate de formule générale (I) selon la revendication 1, caractérisé en ce qu'un acide pipéridine-4-carboxylique protégé sur l'azote est d'abord estérifié par un phénol ou un alcool de formule $R^1\text{-}X_2\text{-}H$ et ensuite, en éliminant le groupe protecteur, est N-acylé par un acide carboxylique ou un chlorure d'acide carboxylique de formule $R^2\text{-}X_1\text{-}CO\text{-}OH$ ou $R^2\text{-}X_1\text{-}CO\text{-}Cl$.

5. Utilisation du pipéridine-4-carboxylate de formule générale (I) selon la revendication 1, en tant que constituants

dans des mélanges de cristaux liquides, en particulier chiraux smectiques, de préférence ferroélectriques.

6. Mélange de cristaux liquides contenant au moins un pipéridine-4-carboxylate de formule générale (I) selon la revendication 1.

7. Composant électrooptique contenant un mélange à cristal liquide selon la revendication 6.